(19) Europäisches Patentamt
European Patent Office
Office européen des brevets

(11) **EP 2 610 118 B1**

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(51) Int Cl.:
***B60S 1/08*** *(2006.01)*

(21) Anmeldenummer: **12199386.9**

(22) Anmeldetag: **27.12.2012**

(54) **Asymmetrische, geräuschoptimierte Wischertrajektorien, Werkzeug zu deren Entwicklung, und Verfahren zum Betreiben eines Wischantriebs mit asymmetrischer, geräuschoptimierter Wischertrajektorie**

Asymmetric, noise-optimised wiper trajectories, tool for their development, and method for operating a wiper drive with an asymmetric, noise optimised wiper trajectory

Trajectoires de balais asymétriques à optimisation du bruit, outil destiné à leur développement et procédé de fonctionnement d'un entraînement de balais ayant des trajectoires de balais asymétriques à optimisation du bruit

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.12.2011 DE 102011089904**

(43) Veröffentlichungstag der Anmeldung:
**03.07.2013 Patentblatt 2013/27**

(73) Patentinhaber: **Robert Bosch GmbH 70442 Stuttgart (DE)**

(72) Erfinder: **Schwenk, Harry 77815 Buehl (DE)**

(56) Entgegenhaltungen:
**DE-A1-102005 048 343     US-A1- 2004 051 491**

**EP 2 610 118 B1**

**Beschreibung**

Die Erfindung betrifft die Verbesserung bzw. Optimierung von Trajektorien von Wischantrieben bzw. Wischanlagen, ein Verfahren zum Betreiben eines Wischantriebs bzw. einer Wischeranlage mit einem Motor, ein Computerprogrammprodukt mit Programmcode, der auf einem maschinenlesbaren Träger gespeichert ist, und ein Steuergerät für einen Wischantrieb bzw. eine Wischanlage. Insbesondere bezieht sich die Erfindung hierbei auf die Reduzierung von Geräuschen bei einem Wischer.

Stand der Technik

Die DE 10 2005 048 343 A1 wird als nächstliegender Stand der Technik gegenüber dem Gegenstand der unabhängigen Ansprüche angesehen.

Es sind zahlreiche Verfahren zur Steuerung von Wischantrieben (WSA) bekannt. Zum Beispiel beschreibt DE 101 44 985 einen Antrieb, der über eine Wischerwelle und ein von der Stellung des Getriebes abhängigem Drehmoment einen Wischer antreibt. Hierbei wird eine Steuerung derart verwendet, dass das von einem Motor abgegebene Drehmoment zu jedem Zeitpunkt unter Berücksichtigung des Übersetzungsverhältnisses bestimmt wird.

Bei Wischanlagen mit Wischerdirektantrieben können Antriebe mit reversierenden Elektromotoren verwendet werden, bei denen der Motor zur Generierung der Hin- und Herbewegung des Wischers die Drehrichtung wechseln. Das Wischerblatt wechselt hierbei die Bewegungsrichtung in einer unteren bzw. oberen Wendelage. Zum Beispiel kann ein in einem Wischantrieb enthaltener Elektromotor durch Pulsweitenmodulation (PWM) eine reduzierte Spannung zugeführt werden und so eine Steuerung der Trajektorie durchgeführt werden. Dies kann genutzt werden, um die Trajektorie im Bezug auf die Anforderungen zu verbessern. Zum Beispiel erfolgt die Darstellung geräuschoptimierter Bewegungsabläufe mit dem Ziel, das Wischverhalten so zu gestalten, dass die Geräuschentwicklung, die vor allem in der Wendelage besonders groß ist, minimiert wird. Oft wird ein Ansatz verfolgt, bei dem ein Zusammensetzen individueller Funktionsäste einer Trajektorie durchgeführt wird. Dabei soll die Wischarmbewegungen so gestaltet werden, dass das Umklappgeräusch der Wischblätter an den Wendelagen reduziert werden soll.

Offenbarung der Erfindung

Die Aufgabe der Erfindung besteht darin, die oben genannten Probleme zumindest teilweise zu lösen bzw. eine verbesserte Entwicklung von Trajektorien von Wischern und verbesserte Trajektorien für Wischer zur Verfügung zu stellen.

Gemäß einer Ausführungsform wird ein Verfahren zum Betreiben einer Wischanlage mit zumindest einem Motor für zumindest einen Scheibenwischer zur Verfügung gestellt. Das Verfahren beinhaltet: definieren eine Soll-Trajektorie, wobei die Soll-Trajektorie eine durch eine Zeitachsentransformations-Funktion oder eine Frequenzmodulations-Funktion erzeugte Asymmetrie umfasst, und wobei die Soll-Trajektorie eine tangentiale Stetigkeit, insbesondere eine Krümmungsstetigkeit, aufweist und betreiben der Wischanlage, wobei der zumindest eine Motor zum Folgen der Soll-Trajektorie angesteuert wird.

Gemäß einer weiteren Ausführungsform wird ein Verfahren zum Bestimmen zumindest einer Soll-Trajektorie für eine Wischanlage mit zumindest einem Motor für zumindest einen Scheibenwischer zur Verfügung gestellt. Das Verfahren beinhaltet: erzeugen einer Wischerkennlinie mit einer Anzahl von n Parametern, und erzeugen der Soll-Trajektorie durch Hinzufügen einer Asymmetrie zu der Wischerkennlinie mittels einer Zeitachsentransformations-Funktion oder einer Frequenzmodulations-Funktion, wobei insbesondere die Zeitachsentransformations-Funktion oder die Frequenzmodulations-Funktion einen oder mehrere weiteren Parameter aufweist.

Gemäß einer weiteren Ausführungsform wird ein Steuergerät für eine Wischanlage zur Verfügung gestellt, das zur Anwendung in einem Verfahren zum Betreiben einer Wischanlage mit zumindest einem Motor für zumindest einen Scheibenwischer programmiert ist. Das Verfahren beinhaltet definieren eine Soll-Trajektorie, wobei die Soll-Trajektorie eine durch eine Zeitachsentransformations-Funktion oder eine Frequenzmodulations-Funktion erzeugte Asymmetrie umfasst, und wobei die Soll-Trajektorie eine tangentiale Stetigkeit, insbesondere eine Krümmungsstetigkeit, aufweist und betreiben der Wischanlage, wobei der zumindest eine Motor zum Folgen der Soll-Trajektorie angesteuert wird.

Gemäß einer weiteren Ausführungsform wird Computerprogrammprodukt mit Programmcode, der auf einem maschinenlesbaren Träger gespeichert ist, zur Durchführung eines der Verfahren, wenn das Programm auf einem Computer oder einem Steuergerät eines Fahrzeugs ausgeführt wird. Hierbei beinhaltet das Verfahren entweder definieren eine Soll-Trajektorie, wobei die Soll-Trajektorie eine durch eine Zeitachsentransformations-Funktion oder eine Frequenzmodulations-Funktion erzeugte Asymmetrie umfasst, und wobei die Soll-Trajektorie eine tangentiale Stetigkeit, insbesondere eine Krümmungsstetigkeit, aufweist und betreiben der Wischanlage, wobei der zumindest eine Motor zum Folgen der Soll-Trajektorie angesteuert wird oder das Verfahren beinhaltet erzeugen einer Wischerkennlinie mit einer Anzahl von n Parametern, und erzeugen der Soll-Trajektorie durch hinzufügen einer Asymmetrie zu der Wischerkennlinie mittels einer Zeitachsentransformations-Funktion oder einer Frequenzmodulations-Funktion, wobei insbesondere die Frequenzmodulations-Funktion einen weiteren Parameter aufweist.

Gemäß einer noch weiteren Ausführungsform wird ein Soll-Trajektorien-Entwicklungswerkzeug, zum Beispiel zur Manipulation vorhandener Kennlinien oder Soll-Trajektorien, zur Verfügung gestellt. Das Entwicklungswerkzeug beinhaltet ein Computerprogrammprodukt mit Programmcode, der auf einem maschinenlesbaren Träger gespeichert ist, zur Durchführung eines der Verfahren, wenn das Programm auf einem Computer. Hierbei beinhaltet das Verfahren erzeugen einer Wischerkennlinie mit einer Anzahl von n Parametern, und erzeugen der Soll-Trajektorie durch hinzufügen einer Asymmetrie zu der Wischerkennlinie mittels einer Zeitachsentransformations-Funktion oder einer Frequenzmodulations-Funktion, wobei insbesondere die Zeitachsentransformations-Funktion oder die Frequenzmodulations-Funktion mindestens einen weiteren Parameter aufweist. Das Entwicklungswerkzeug beinhaltet ferner ein Simulationswerkzeug für eine Wischanlage oder einen Datenschnittstelle zu einer Wischanlage für den Test in einer Wischanlage.

Bevorzugte Ausführungsformen und besondere Aspekte der Erfindung ergeben sich aus den Unteransprüchen, in den Zeichnungen und der beiliegenden Beschreibung.

Vorteile der Erfindung

Die hier beschriebenen Ausführungsformen gemäß der vorliegenden Erfindung ermöglichen es eine bereits existierende Wischerkennlinie durch Transformation einer Geräuschoptimierung, vor allem in den Wendelagen, zu unterziehen. Hierbei können durch einen weiteren Parameter bei der Trajektorien-Ermittlung bereits erfolgte Entwicklungen, d.h. bereits erzielte Randbedingungen, einer Wischertrajektorie beibehalten werden. Somit kann eine Transformation zur Verfügung gestellet werden, die erlaubt, dass die Wischerpositionen eines Mehrwischersystems zueinander invariant sind, so dass bereits applizierte Trajektorien nicht mehr neu angepasst werden müssen.

Ausführungsformen der Erfindung stellen hierzu ein Werkzeug zur Erzeugung einer geräuschverbesserten bzw. geräuschoptimierten Solltrajektorie eines Scheibenwischers zur Verfügung. Hierzu wird eine Frequenzmodulation bzw. Zeitachsentransformation für eine bereits existierende Wischerkennlinie durchgeführt, wobei ein Asymmetrie-Parameter hinzugefügt wird. Daraus resultieren eine vereinfachte Entwicklung verbesserter Trajektorien von Wischern, sowie verbesserte Wischertrajektorien.

Gemäß einer Ausführungsform der Erfindung wird ein Verfahren zum Betreiben einer Wischanlage mit zumindest einem Motor für zumindest einen Scheibenwischer zur Verfügung gestellt. Dies beinhaltet definieren eine Soll-Trajektorie, wobei die Soll-Trajektorie eine durch eine Zeitachsentransformations-Funktion oder eine Frequenzmodulations-Funktion erzeugte Asymmetrie umfasst, und wobei die Soll-Trajektorie eine tangentiale Stetigkeit, insbesondere eine Krümmungsstetigkeit, aufweist und betreiben der Wischanlage, wobei der zumindest eine Motor zum Folgen der Soll-Trajektorie angesteuert wird. Durch die Zeitachsentransformations-Funktion oder die Frequenzmodulationsfunktion und die Stetigkeit kann eine Verbesserung bzw. eine Optimierung, zum Beispiel im Bezug auf Wischgeräusche durch das Hinzufügen einer Asymmetrie erzeugt werden, wobei als Grenzwert der Optimierung der Symmetrische Fall inkludiert ist, und bereits bestehende Eigenschaften einer Kennlinie, wie zum Beispiel Kollisionsfreiheit von zwei Wischblättern, bestehen bleibt.

Gemäß einer weiteren typischen Ausführungsform kann zumindest ein erster und ein zweiter Motor angesteuert werden. Es kann eine weitere Soll-Trajektorie definiert werden, wobei die weitere Soll-Trajektorie eine durch die Zeitachsentransformations-Funktion oder die Frequenzmodulations-Funktion erzeugte Asymmetrie umfasst und wobei die weitere Soll-Trajektorie eine tangentiale Stetigkeit, insbesondere eine Krümmungsstetigkeit, aufweist, wobei der erste Motor zum Folgen der Soll-Trajektorie angesteuert wird, und der zweite Motor zum Folgen der weiteren Soll-Trajektorie angesteuert wird. Durch die Frequenzmodulation von zwei Wischerkennlinien, zum Beispiel eine Wischerkennlinie für die Fahrerseite und die Wischerkennlinie für die Beifahrerseite, werden die existierenden Wischerkennlinien zueinander nicht verändert. Eine Applikation für minimalen Abstand und/oder eine Applikation für Kollisionsfreiheit ändert sich durch das Hinzufügung des weiteren Parameters zur Trajektorien-Entwicklung nicht.

Gemäß einer weiteren typischen Ausführungsform kann die Asymmetrie zumindest darin bestehen, dass ein Wischblatt der Wischanlage mit einer ersten Geschwindigkeit in eine erste Position, die im Wesentlichen einer Wendelage entspricht, bewegt wird, und mit einer zweiten Geschwindigkeit, die kleiner als die erste Geschwindigkeit ist, aus der ersten Position bewegt wird. Geräuschoptimierungen finden für Wischanlagen vor allem in den Wendelagen statt. Die Asymmetrie mit einer schnelleren Bewegung in die Wendelage im Vergleich zu einer langsameren Bewegung aus der Wendelage führt zu einem langsamen Umklappen, welches das Umklappgeräusch reduziert.

Gemäß einer weiteren typischen Ausführungsform kann die Zeitachsentransformations-Funktion oder die Frequenzmodulations-Funktion eine Reihenentwicklung eines Betrags einer stetigen trigonometrischen Funktion, zum Beispiel ein Betrag einer Sinusfunktion sein. Insbesondere kann eine Reihenentwicklung bis zumindest zur dritten Ordnung, typischerweise zumindest zur fünften Ordnung, zum Beispiel bis zur achten Ordnung durchgeführt werden. Hierdurch kann eine stetige Funktion, eine Funktion mit stetiger Steigung, d.h. mit tangentialer Stetigkeit, und eine Funktion mit stetiger Krümmung erzeugt werden, die ein Vorhandensein von Extremstellen in den Wendenlagen ermöglicht.

Gemäß einer weiteren typischen Ausführungsform kann die Frequenzmodulations-Funktion einen Parameter aufweisen, dessen Grenzwert zu einer invarianten Transformation führt. Hierdurch kann, auch wenn der invariante Grenzwert selbst nicht zu einer verbesserten Trajektorie gemäß Ausführungsformen der Erfindung führt, eine Asymmetriefunktion bzw. Asymmetrietransformation eingeführt werden, die eine vereinfachte Optimierung des zusätzlichen Parameters ermöglicht und die die auf eine bereits existierende Wischerkennlinie adaptiert werden kann.

Gemäß einer weiteren Ausführungsform wird ein Verfahren zum Bestimmen zumindest einer Soll-Trajektorie für eine Wischanlage mit zumindest einem Motor für zumindest einen Scheibenwischer zur Verfügung gestellt. Das Verfahren beinhaltet erzeugen einer Wischerkennlinie mit einer Anzahl von n Parametern, und erzeugen der Soll-Trajektorie durch hinzufügen einer Asymmetrie zu der Wischerkennlinie mittels einer Frequenzmodulations-Funktion, wobei insbesondere die Frequenzmodulations-Funktion einen weiteren Parameter aufweist. Hierdurch wird eine Verbesserung bzw. Optimierung wie zum Beispiel eine Geräuschoptimierung mit nur einem zusätzlichen Parameter ermöglicht.

Gemäß einer weiteren typischen Ausführungsform kann die Wischerkennlinie und die Soll-Trajektorie eine tangentiale Stetigkeit, insbesondere eine Krümmungsstetigkeit, aufweisen. Dies führt zur Möglichkeit der analytischen Berechnung und einem intuitiven Zugang für eine Entwicklung von Trajektorien mit gewünschten Eigenschaften.

Gemäß weiteren Ausführungsformen werden Steuergeräte für eine Wischanlage zur Steuerung von Verfahren gemäß hier beschriebene Ausführungsformen, Entwicklungswerkzeuge in Form von Computerprogrammprodukten, die zum Beispiel mit einer Wischanlage für die Entwicklung verbunden sein können oder mit einem Simulationstool verbunden werden können, und Wischanlagen zur Durchführung der beschriebenen Verfahren zur Verfügung gestellt. Die Vorrichtungen, können durch Software, Speichermedien für Programabläufe, Benutzeroberflächen für eine Trajektorientwicklung anhand von zu bestimmenden Parametern und/oder ähnliches ausgebildet sein. Ferner richten sich Ausführungsformen auf eine Scheibenwischvorrichtung mit einem Steuergerät oder einem Computerprogrammprodukt gemäß hier beschriebener Ausführungsformen der Erfindung.

Kurze Beschreibung der Zeichnungen

Ausführungsbeispiele der Erfindung sind in den Figuren dargestellt und werden im Folgenden näher beschrieben. Es zeigen:

Figur 1 eine schematische Darstellung eines Wischantriebs, eines Scheibenwischers, der Steuer- und Kontrollelemente sowie der für den Betrieb typischen Wischerpositionen;
Figur 2 eine schematische Darstellung einer Transformation zur Verbesserung von Wischantriebstrajektorien ;
Figur 3 eine schematische Darstellung einer transformierten, verbesserten Wischantriebstrajektorie;
Figur 4 eine schematische Darstellung von Wischblattwinkeln einer verbesserten Wischantriebstrajektorie ,
Figur 5 ein Ablaufdiagramm zur Verbesserung von Trajektorien von Wischantrieben, und
Figur 6 ein Ablaufdiagramm eines Verfahrens zum Betreiben einer Wischanlage.

Ausführungsformen der Erfindung

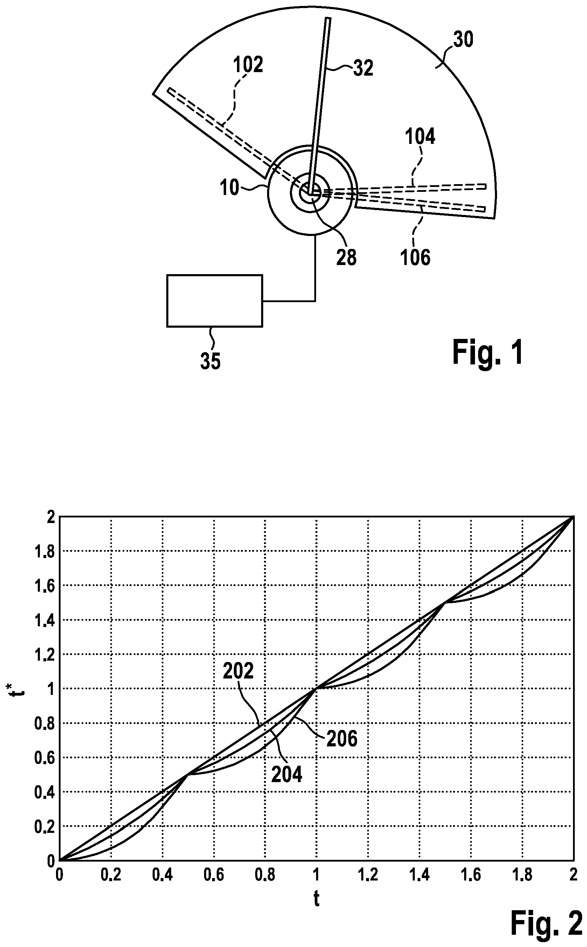

Figur 1 zeigt eine schematische Darstellung eines Aufbaus eines Wischantriebs. Ein Motor 10 führt am Lager 28 zu einer Drehbewegung des Wischhebels 32. Figur 1 zeigt den Wischhebel 32 in einer beliebigen Position auf der Scheibe 30. Durch die gestrichelten Linien wird die obere Wendelage 102, die untere Wendelage 104, und die erweiterte Parkstellung 106 dargestellt. Durch reversierende Rotation des Motors 10 wird im Normalbetrieb der Wischhebel 32 zwischen der oberen Wendelage 102 und der unteren Wendelage 104 hin- und herbewegt. Wird der Wischer während des Betriebs des Kraftfahrzeugs nicht benötigt oder nicht verwendet, das heißt wenn ein Benutzer den Wischantrieb ausschaltet, fährt der Wischhebel 32 von der unteren Wendelage 104 in die erweiterte Parkstellung 106. Typischerweise befindet sich die erweiterte Parkstellung 106 an einer sehr tiefen Position auf der Scheibe, z.B. ganz oder teilweise im Windschatten einer entsprechenden Hervorhebung einer Kühlerhaube eines Kraftfahrzeugs.

Wie in Figur 1 dargestellt wird der Motor typischerweise durch ein Steuergerät 35 gesteuert und der Motor erkennt seine Lage, z.B. eine Rotation um die Achse 28, durch einen Sensor, wie zum Beispiel einen Magnetsensor. Das Steuergerät kann gemäß manchen Ausführungsformen ausgebildet sein, eine verbesserte Soll-Trajektorie gemäß Ausführungsformen der Erfindung zu erzeugen. Gemäß anderen Ausführungsformen kann es eine existierende Kennlinie einer Frequenzmodulation unterwerfen, um eine verbesserte Soll-Trajektorie gemäß Ausführungsformen der Erfindung zu erzeugen. Gemäß noch weiteren Ausführungsformen kann es sich bei dem Steuergerät um eine Steuerung eines Trajektorie-Entwicklungswerkzeugs handeln, das zum Beispiel mit einer Datenschnittstelle mit der Wischanlage verbunden ist, und so zur Verbesserung bzw. Optimierung der Parameter, d.h. zur Parameterbestimmung für die Asymmetrie-Funktion verwendet werden kann.

Eine Geräuschoptimierung kann dadurch realisiert werden, dass die Solltrajektorien der Wischarme an den Wendelagen asymmetrisch ausgelegt werden, so dass die Wischarme langsamer aus der Wendelage herausfahren. Dadurch wird das Umklappen des Wischgummis verlangsamt.

Bei bisherigen Entwicklungen von asymmetrischen Trajektorien und den daraus resultierenden Ergebnisse liegt das Problem vor allem im Verhalten der Gesamtfunktion an den Fügestellen, d.h. den Wendlagen, und an deren Darstellung, da die Differenzierbarkeit der Funktion für die abzuhandelnden Fälle nicht gilt. Daher ist das bisher zum Einsatz kommende Verfahren unintuitiv und/oder problematisch, so dass die Auslegung der Trajektorien schwierig ist und Iterationen und Zeit erfordert.

Gemäß Ausführungsformen der Erfindung wird eine geschlossene mathematische Beschreibung solcher Trajektorien ermöglicht. Eine Wischeranlage profitiert hierbei von verbesserten Wischverläufen, welche das Systemverhalten noch weiter optimieren bzw. verbessern. Es wird hierzu eine Realisierung asymmetrischer, geräuschoptimierter Wischerbewegungsverläufe, d.h. Wischertrajektorien, aus symmetrischen Verläufen mittels analytisch bestimmter Frequenzmodulation (Zeitachsensubstitution) unter Anwendung z.B. eines einzigen zusätzlichen Parameters (Asymmetrie-Faktor) zur Verfügung gestellt. Es wird somit eine Zeitachsentransformations-Funktion oder eine Frequenzmodulationsfunktion zur verfügung gestellt. Hierbei existiert eine Funktion $t^*(t)$, für die $\sin(\omega(t)\cdot t) = \sin(\omega_o \cdot t^*(t))$ für alle $t$ gilt. Die Funktion wird durch mindestens einen, und bevorzugt durch genau einen Parameter bestimmt. Dieser oder diese Parameter bzw. Faktor kann beispielsweise in der Vorsteuerungskennlinie, in der Software (Steuergerät, oder Bordcomputer, "Komfortwischmodus") oder auch hardwareseitig, zum Beispiel durch einen zusätzlichen Schalter, realisiert werden.

Gemäß typischen Ausführungsformen, wird die Asymmetrie durch ein verlangsamtes Herausfahren aus einer Position, die im Wesentlichen der Wendelage entspricht, zur Verfügung gestellt. Eine analoge Frequenzmodulation kann jedoch an beliebigen Stellen der Wischertrajektorie dynamisch zur Laufzeit durchgeführt werden. Zum Beispiel kann dies durch Approximationsverfahren gestützt werden.

Figur 2 zeigt ein Beispiel einer Zeitachsentransformation bzw. Frequenzmodulation wobei $t$ in $t^*(t)$ überführt wird. Zum Beispiel kann als Funktion eine Reihenentwicklung von $t^*(t) = t - a/\omega \cdot |\sin(\omega \cdot t)|$ verwendet werden. Die $|\sin|$-Funktion ist (abgesehen von den nicht differenzierbaren Punkten) monoton für $a$ im Bereich $[-1,1]$. Da jedoch zur vollständigen analytischen Trajektorientransformation eine stetig differenzierbare Funktion benötigt wird, ist es hier erforderlich, die oben verwendete Funktion durch eine Reihe zu approximieren.

$$t^*(t) = t - a/\omega \cdot \sum (A_k \cdot \cos(k \cdot \omega \cdot t) + B_k \cdot \sin(k \cdot \omega \cdot t))$$

Insbesondere kann eine Reihenentwicklung bis zumindest zur dritten Ordnung (k=3), typischerweise zumindest der fünften Ordnung (k=5), zum Beispiel bis zur achten Ordnung durchgeführt werden. Hierdurch kann eine stetige Funktion, eine Funktion mit stetiger Steigung, d.h. mit tangentialer Stetigkeit, und eine Funktion mit stetiger Krümmung erzeugt werden, die ein Vorhandensein von Extremstellen in den Wendenlagen ermöglicht. Eine Approximation einer Funktion $t^*(t) = t - a/\omega \cdot |\sin(\omega \cdot t)|$ kann hierdurch unter Einhaltung der genannten Randbedingungen mit Abweichung < 2% gewährleistet werden. Alternativ kann auch eine Filterung von $|\sin(\omega \cdot t)|$ zur Zeitachsentransformation oder Frequenzmodulation verwendet werden.

Die Kurve 202 in Figur 2 zeigt eine invariante Transformation für $a = 0$, die als Grenzwert der durchzuführenden Transformation mit a>0 existiert. Die Kurve 204 in Figur 2 zeigt eine Transformation für $a = 0.5$. Die Kurve 206 in Figur 2 zeigt eine Transformation für $a = 1$, wobei a=1 einen weiteren Grenzwert darstellt, der zu achsparallelen Tangenten einer Trajektorie führt.

Die Darstellung geräuschoptimierter Bewegungsabläufe erfolgt mit dem Ziel, das Wischverhalten so zu gestalten, dass die Geräuschentwicklung, die vor allem in der Wendelage besonders groß ist, minimiert wird. Ausführungsformen der vorliegenden Erfindung stellen eine Verbesserung im Vergleich zu Kennlinien, die durch das Zusammensetzen individueller Funktionsäste generiert werden, zur Verfügung. Durch die Ausführungsformen der Erfindung mit einer Frequenzmodulation und der dadurch hinzugefügten Asymmetrie, insbesondere in den Wendelagen, wird ein ganzheitlicher Ansatz erzielt, welcher den symmetrischen Fall, d.h. die unverzerrte Trajektorie, als Grenzfall enthält. Insbesondere wird, was aus Applikationssicht günstig ist, ein Ansatz zur Verfügung gestellt, welcher einen einzelnen Verzerrungsparameter (Asymmetriefaktor) zur entsprechenden Deformierung der Kurve definiert. Damit können die bereits für unterschiedlichste Wischkonzepte erprobte Standard-Trajektorien mit geringem applikativem Aufwand angepasst werden.

Gemäß Ausführungsformen der Erfindung wird eine beliebige Trajektorie mittels Frequenzmodulation so verändert, dass sich ihre Symmetrieeigenschaften verändern. Aus mathematischer Sicht handelt es sich bei diesem Ansatz um eine nichtlineare Koordinatentransformation der Zeitachse, so dass die einzelnen Samples der Trajektorie unterschiedlich schnell aufeinander folgen. Diese Transformation lässt sich zum Beispiel durch Substitution der Zeitfunktion $t \rightarrow t^*(t)$ realisieren. Daraus folgt für die Trajektorie:

$$\varphi(t) \rightarrow \varphi(\omega \cdot t^*(t))$$

Gemäß typischen Ausführungsformen ist die Transformationsfunktion t* monoton steigend. Dies verhindert Oszillationen in der Vorsteuerung. Dies ist bei der Parametrisierung zu berücksichtigen und Parameter können daher in ihren möglichen bereichen begrenzt sein. Durch eine Verschachtelung der Funktion lässt sich eine beliebige Asymmetrie mittels Zeit- bzw. Frequenzmodulation darstellen. Von Vorteil ist, dass sich hierbei auch die Ableitungen analytisch berechnen lassen. Daher sind die Funktionen φ(t) und t*(t) typischerweise entsprechend differenzierbar.

Die Ausführungsformen der vorliegenden Erfindung bringen somit zumindest einen der folgenden Vorteile mit sich: für t*(t) = t ist die Transformation invariant. Damit ist die unveränderte Trajektorie eine Untermenge aller beliebig transformierten Wischertrajektorien, was bei der Implementierung in unterschiedlichen Fahrzeugtypen als Komfortwischmodus von Vorteil ist. Ferner werden Trajektorien in einer Zwei-Motor-Wischanlage, d.h. zum Beispiel eine Trajektorie für die Fahrerseite und eine Trajektorie für die Beifahrerseite, bei einheitlicher Transformation zueinander nicht verändert, da die untransformierten Wischkennlinien unverändert bleiben. Werden zwei Trajektorien beispielsweise auf minimalen Abstand von zwei Wischblättern appliziert, so verändert sich diese Eigenschaft nach einer beliebigen Transformation t*(t) nicht. Auch eine einmal applizierte Kollisionsfreiheit wird auch bei herbeigeführter Asymmetrie beibehalten. Ferner können mit nur einem zusätzlichen Parameter das Verhalten in der oberen Wendelage (OWL) und der unteren Wendelage (UWL) äquivalent verändern werden. Darüber hinaus ist die Optimierung von Geräuschen durch die Transformation gemäß Ausführungsformen der Erfindung intuitiv, anschaulich und dadurch benutzerfreundlich.

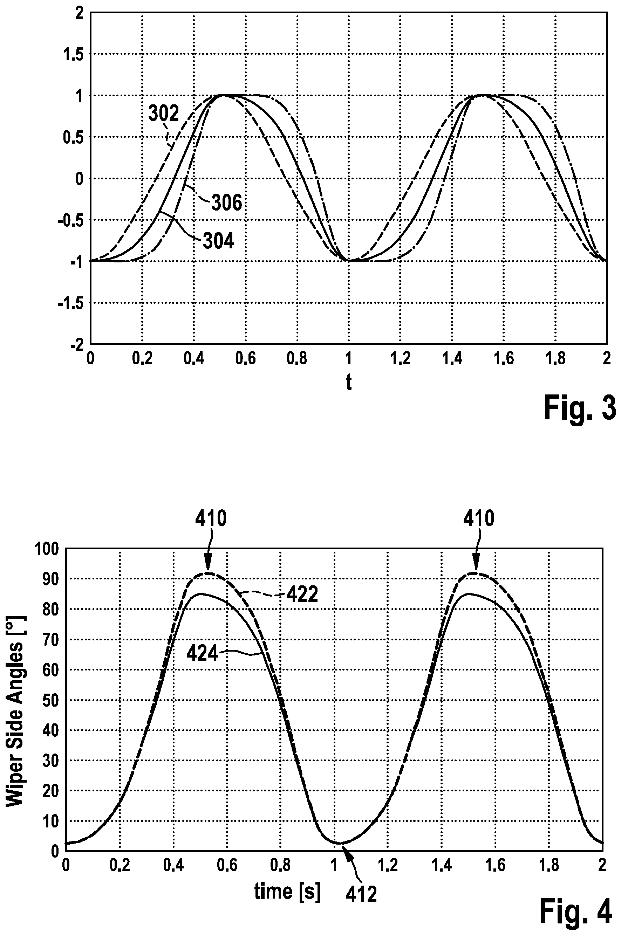

Figur 3 zeigt Beispiele, einer bereits existierenden Kennlinie 302 (a=0), die hier zur Vereinfachung als

$$\varphi(t) = -A \cdot \cos(\omega \cdot t)$$

dargestellt ist. Die Kurven 304 ergeben sich aus den Transformation für a=0.5 und a=1. Figur 4 stellt analoge Trajektorien für die Fahrerseite, siehe Kurve 424, und die Beifahrerseite, siehe Kurve 422, dar. in Figur 4 sind weiterhin die OWL 410 und die UWL 412 gekennzeichnet. Die kurven zeigen deutlich, dass eine Asymmetrie durch ein langsameres Bewegen aus der Wendelage heraus existiert. Das heißt es ist ersichtlich, dass die Steigung, also die erste Ableitung nach der Zeit und somit die Geschwindigkeit, beim Bewegen aus der Wendelage heraus geringer ist.

Gemäß typischen Ausführungsformen haben die Transformationsfunktionen, wie sie zum Beispiel in Figur 2 dargestellt sind, lokale Extremstellen bei k/2·T, wobei k eine natürliche Zahl, und T die Zeit für eine Bewegungsperiode ist.

Gemäß den hier beschriebenen Ausführungsformen weist die Transformationsfunktion oder Modulationsfunktion eine Krümmungsstetigkeit auf und/oder ist steig bis zur zweiten Ableitung. Für ein a > 0 kann die Steigung der modulierenden Funktion unmittelbar vor den Stellen k/2·T am größten, und unmittelbar danach am kleinsten sein. Werden für k größere Werte, d.h. größer als 1, verwendet so können zusätzlich zu den Asymmetrien in einer Position, die im Wesentlichen der Wendelage entspricht, weitere Asymmetrien hinzugefügt werden. Typischerweise sollte die Asymmetrie in den Wendelagen erzeugt werden. Ein Verbesserung der Geräuschentwicklung durch Umklappen des Wischgummis kann aber auch dadurch erzeugt werden, dass die lokale Extremstelle der Transformationsfunktion oder der Modulationsfunktion kurz vor oder kurz nach dem Wendepunkt, zum Beispiel mit einer Abweichung von ca. 1%, 0.5 % oder kleiner einer Bewegungsperiode von der Wendelage erfolgt.

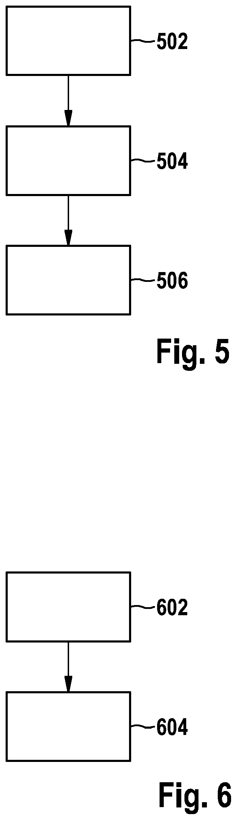

Gemäß weiteren Ausführungsformen der Erfindung können auch Verfahren zur Erzeugung von Wischertrajektorien bzw. Trajektorien-Entwicklungstools durch entsprechende Software und Test- bzw. Simulationsmechanismen zur Verfügung gestellt werden. Figur 5 zeigt den Ablauf eines Verfahrens, wobei in Schritt 502 zunächst eine existierende Kennlinie verwendet wird. In Schritt 504 wird eine Modulation zur Erzeugung einer Asymmetrie mit einem Parameter eingeführt und in Schritt 506 wird der Parameter durch Simulationen oder Tests optimiert. Diese Optimierung kann zum Beispiel in einer Geräuschoptimierung des Wischens in den Wendelagen bestehen.

Die daraus resultierende Soll-Trajektorie mit den hierin beschriebenen Eigenschaften der Ausführungsformen wird in Figur 6 in Schritt 602 als Soll-Trajektorie für den Betrieb definiert, so dass in Schritt 604 ein Ansteuern eines Motors einer Wischanlage zum Folgen der Solltrajektorie erfolgen kann.

Gemäß typischen Ausführungsformen kann der Ablauf einer Applikation einer Verbesserung einer Trajektorie zweistufig durchgeführt werden. Zunächst wird eine Applikation der Wischkennlinien im symmetrischen Fall (Asymmetriefaktor = 0), zum Beispiel auf minimaler Abstand oder ein anderes Verhalten der Wischarme, durchgeführt. Gemäß Ausführungsformen kann in einem weiteren Schritt eine Veränderung des Asymmetriefaktors zur Geräuschoptimierung erfolgen. Hierbei verändert sich das verhalten zweier Wischarme zueinander nicht.

Ausführungsformen der Erfindung unterstützen eine optimierte Auslegung von geräuschoptimierten Solltrajektorien, welche die Reproduzierbarkeit und Effizienz der ansonsten langwierigeren Geräuschoptimierung steigern kann. Dabei verändert der Trajektorienmodulationsansatz die Wischerverläufe als Funktion der Zeit, jedoch wird eine Invarianz der Wischerpositionen zueinander gewährleistet. Da bei der Trajektorienauslegung zum Beispiel die Gewährleistung von Kollisionsfreiheit von größter Bedeutung ist, ist die Möglichkeit der getrennten Applizierbarkeit des Wischerverlaufs und der Asymmetrie von Vorteil. Eine durchzuführende Geräuschoptimierung macht somit keine komplette Neuauslegung der Trajektorienverläufe erforderlich.

Gemäß typischen Ausführungsformen, die mit anderen hier beschriebenen Ausführungsformen kombiniert werden können, werden die verbesserten Trajektorien, die entsprechenden Verfahren und Vorrichtungen, für Zweimotoren-Wischanlagen und/oder Anlagen mit Wischerdirektantrieb verwendet. Die beschriebene Asymmetrie ist hierbei als Asymmetrie im Wischbetrieb zu verstehen und ist unabhängig von einer Asymmetrie beim Parken in eine Parkstellung oder einer Bewegung aus eine Parkstellung heraus. Ferner ergibt sich die Asymmetrie gemäß manchen Ausführungsformen in periodischen Abständen, zum Beispiel einer Wendelage, beiden Wendelagen, oder den Wendenlagen und weiteren Positionen.

## Patentansprüche

1. Verfahren zum Betreiben einer Wischanlage mit zumindest einem Motor (10) für zumindest einen Scheibenwischer, umfassend:

   definieren eine Soll-Trajektorie, wobei die Soll-Trajektorie eine durch eine Zeitachsentransformations-Funktion oder eine Frequenzmodulations-Funktion erzeugte Asymmetrie umfasst, und wobei die Soll-Trajektorie eine tangentiale Stetigkeit, insbesondere eine Krümmungsstetigkeit, aufweist;
   betreiben der Wischanlage, wobei der zumindest eine Motor zum Folgen der Soll-Trajektorie angesteuert wird.

2. Verfahren gemäß Anspruch 1, wobei zumindest ein erster und ein zweiter Motor angesteuert werden, und weiterhin umfassend:

   definieren einer weiteren Soll-Trajektorie, wobei die weitere Soll-Trajektorie eine durch die Zeitachsentransformations-Funktion oder die Frequenzmodulations-Funktion erzeugte Asymmetrie umfasst und wobei die weitere Soll-Trajektorie eine tangentiale Stetigkeit, insbesondere eine Krümmungsstetigkeit, aufweist, wobei der erste Motor zum Folgen der Soll-Trajektorie angesteuert wird, und der zweite Motor zum Folgen der weiteren Soll-Trajektorie angesteuert wird.

3. Verfahren gemäß einem der Ansprüche 1 bis 2, wobei die Asymmetrie zumindest darin besteht, dass ein Wischblatt der Wischanlage mit einer ersten Geschwindigkeit in eine erste Position, die im Wesentlichen einer Wendelage entspricht, bewegt wird, und mit einer zweiten Geschwindigkeit, die kleiner als die erste Geschwindigkeit ist, aus der ersten Position bewegt wird.

4. Verfahren gemäß einem der Ansprüche 1 bis 3, wobei die Zeitachsentransformations-Funktion oder die Frequenzmodulations-Funktion eine Reihenentwicklung eines Betrags einer stetigen trigonometrischen Funktion ist, insbesondere eine Reihenentwicklung bis zumindest zur dritten Ordnung, typischerweise zumindest der fünften Ordnung.

5. Verfahren gemäß einem der Ansprüche 1 bis 4, wobei die Zeitachsentransformations-Funktion oder die Frequenzmodulations-Funktion einen Parameter aufweist, dessen Grenzwert zu einer invarianten Transformation führt.

6. Verfahren zum Bestimmen zumindest einer Soll-Trajektorie für eine Wischanlage mit zumindest einem Motor (10) für zumindest einen Scheibenwischer, umfassend:

   erzeugen einer Wischerkennlinie mit einer Anzahl von n Parametern;
   erzeugen der Soll-Trajektorie durch hinzufügen einer Asymmetrie zu der Wischerkennlinie mittels einer Zeitachsentransformations-Funktion oder einer Frequenzmodulations-Funktion, insbesondere wobei die Zeitachsentransformations-Funktion oder die Frequenzmodulations-Funktion zumindest einen weiteren Parameter aufweist.

7. Verfahren gemäß Anspruch 6, wobei die Wischerkennlinie und die Soll-Trajektorie eine tangentiale Stetigkeit, insbesondere eine Krümmungsstetigkeit, aufweist.

8. Steuergerät (20) für eine Wischanlage, das zur Anwendung in einem Verfahren nach einem der Ansprüche 1 bis 5 programmiert ist.

9. Computerprogrammprodukt mit Programmcode, der auf einem maschinenlesbaren Träger gespeichert ist, zur Durchführung eines der Verfahren nach einem der Ansprüche 1 bis 7, wenn das Programm auf einem Computer oder einem Steuergerät eines Fahrzeugs ausgeführt wird.

10. Soll-Trajektorien-Entwicklungswerkzeug, umfassend:

ein Computerprogrammprodukt gemäß Anspruch 9 wenn er sich auf Ansprüche 6 bis 7 rückbezieht; und
ein Simulationswerkzeug für eine Wischanlage oder einen Datenschnittstelle zu einer Wischanlage für den Test in einer Wischanlage.

**Claims**

1. Method for operating a wiper system having at least one motor (10) for at least one wiper, comprising:

defining an intended trajectory, wherein the intended trajectory comprises an asymmetry produced by a time-axis transformation function or a frequency modulation function, and wherein the intended trajectory has a tangential continuity, in particular a curvature continuity;
operating the wiper system, wherein the at least one motor is actuated to follow the intended trajectory.

2. Method according to Claim 1, wherein at least one first and one second motor are actuated, and furthermore comprising:

defining a further intended trajectory, wherein the further intended trajectory comprises an asymmetry produced by the time-axis transformation function or the frequency modulation function and wherein the further intended trajectory has a tangential continuity, in particular a curvature continuity, wherein the first motor is actuated to follow the intended trajectory, and the second motor is actuated to follow the further intended trajectory.

3. Method according to either of Claims 1 and 2, wherein the asymmetry at least consists of a wiper blade of the wiper system being moved at a first speed into a first position, which substantially corresponds to a turning position, and being moved from the first position at a second speed that is lower than the first speed.

4. Method according to any one of Claims 1 to 3, wherein the time-axis transformation function or the frequency modulation function is a series expansion of an absolute value of a continuous trigonometric function, in particular a series expansion up to at least third order, typically of fifth order.

5. Method according to any one of Claims 1 to 4, wherein the time-axis transformation function or the frequency modulation function has a parameter, the limit value of which leads to an invariant transformation.

6. Method for determining at least one intended trajectory for a wiper system having at least one motor (10) for at least one wiper, comprising:

producing a wiper characteristic with a number of n parameters;
producing the intended trajectory by adding an asymmetry to the wiper characteristic by means of a time-axis transformation function or a frequency modulation function, in particular wherein the time-axis transformation function or the frequency modulation function has at least one further parameter.

7. Method according to Claim 6, wherein the wiper characteristic and the intended trajectory have a tangential continuity, in particular a curvature continuity.

8. Control device (20) for a wiper system, programmed for use in a method according to any one of Claims 1 to 5.

9. Computer program product having program code, which is stored on a machine-readable medium, for carrying out one of the methods according to any one of Claims 1 to 7 when the program is executed on a computer or a control device of a vehicle.

10. Intended trajectory development tool, comprising:

a computer program product according to Claim 9, if referring back to Claims 6 to 7; and
a simulation tool for a wiper system or a data interface to a wiper system for testing in a wiper system.

**Revendications**

1. Procédé pour faire fonctionner un système essuie-glace pourvu d'au moins un moteur (10) pour au moins un essuie-glace, comprenant :

   définition d'une trajectoire de consigne, la trajectoire de consigne comprenant une asymétrie générée par une fonction de transformation sur l'axe du temps ou une fonction de modulation de fréquence, et la trajectoire de consigne présentant une continuité tangentielle, notamment une continuité de courbure ;
   mise en fonctionnement du système essuie-glace, l'au moins un moteur étant excité pour suivre la trajectoire de consigne.

2. Procédé selon la revendication 1, au moins un premier et un deuxième moteur étant excités, et comprenant en outre :

   définition d'une trajectoire de consigne supplémentaire, la trajectoire de consigne supplémentaire comprenant une asymétrie générée par la fonction de transformation sur l'axe du temps ou la fonction de modulation de fréquence, et la trajectoire de consigne supplémentaire présentant une continuité tangentielle, notamment une continuité de courbure, le premier moteur étant excité pour suivre la trajectoire de consigne et le deuxième moteur étant excité pour suivre la trajectoire de consigne supplémentaire.

3. Procédé selon l'une des revendications 1 et 2, l'asymétrie consistant au moins à déplacer un balai d'essuie-glace du système essuie-glace à une première vitesse dans une première position, laquelle correspond pour l'essentiel à une position de retournement, et à le déplacer hors de la première position à une deuxième vitesse qui est inférieure à la première vitesse.

4. Procédé selon l'une des revendications 1 à 3, la fonction de transformation sur l'axe du temps ou la fonction de modulation de fréquence étant un développement en série d'une valeur d'une fonction trigonométrique continue, notamment un développement en série au moins jusqu'au troisième ordre, généralement au moins jusqu'au cinquième ordre.

5. Procédé selon l'une des revendications 1 à 4, la fonction de transformation sur l'axe du temps ou la fonction de modulation de fréquence possédant un paramètre dont la valeur limite produit une transformation invariante.

6. Procédé pour déterminer au moins une trajectoire de consigne pour un système essuie-glace pourvu d'au moins un moteur (10) pour au moins un essuie-glace, comprenant :

   génération d'une courbe caractéristique d'essuie-glace avec un nombre n de paramètres ;
   génération de la trajectoire de consigne en ajoutant une asymétrie à la courbe caractéristique d'essuie-glace au moyen d'une fonction de transformation sur l'axe du temps ou d'une fonction de modulation de fréquence, la fonction de transformation sur l'axe du temps ou la fonction de modulation de fréquence possédant notamment au moins un paramètre supplémentaire.

7. Procédé selon la revendication 6, la courbe caractéristique d'essuie-glace et la trajectoire de consigne présentant une continuité tangentielle, notamment une continuité de courbure.

8. Contrôleur (20) pour un système essuie-glace, qui est programmé pour être utilisé dans un procédé selon l'une des revendications 1 à 5.

9. Produit de programme informatique comprenant un code de programme, qui est enregistré sur un support lisible par machine, destiné à mettre en oeuvre l'un des procédés selon l'une des revendications 1 à 7 lorsque le programme est exécuté sur un ordinateur ou sur un contrôleur d'un véhicule.

10. Outil de développement de trajectoires de consigne, comprenant :

    un produit de programme informatique selon la revendication 9 lorsqu'elle se rapporte aux revendications 6 et 7 ; et

un outil de simulation pour un système essuie-glace ou une interface de données avec un système essuie-glace pour le test dans un système essuie-glace.

**Fig. 1**

**Fig. 2**

Fig. 3

Fig. 4

**Fig. 5**

**Fig. 6**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102005048343 A1
- DE 10144985